# EUROPEAN PATENT APPLICATION

(11) **EP 3 151 087 A1**
(43) Date of publication of application: **05.04.2017**
(21) Application number: 14893326.0
(22) Date of filing: 01.07.2014
(51) Int. Cl.: G06F 3/01, G10L 15/26

(54) **VOICE INTERACTION METHOD AND APPARATUS**

(30) Priority: 29.05.2014 CN 201410236274
(71) Applicant: ZTE Corporation, Shenzhen, Guangdong 518057 (CN)
(72) Inventor: HE, Zhibin, Shenzhen Guangdong 518057 (CN); JIANG, Zhifeng, Shenzhen Guangdong 518057 (CN)
(74) Representative: Winter, Brandl, Fürniss, Hübner, Röss, Kaiser, Polte - Partnerschaft mbB
(86) International application number: PCT/CN2014/081419
(87) International publication number: WO 2015/180231

(57) **Abstract**

Disclosed is a voice interaction method and apparatus. In the above method, a first voice control instruction is acquired, and a first operation corresponding to the first voice control instruction is executed (S102); mixed audio data are gathered, where the mixed audio data includes: audio data played when the first operation is executed and a second voice control instruction (S104); the played audio data are filtered out from the mixed audio data, and the second voice control instruction is identified (S106); and it is switched from the first operation to a second operation corresponding to the second voice control instruction according to the second voice control instruction (S108).

## Description

### TECHNICAL FIELD

The present disclosure relates to the field of communication, and in particular to a voice interaction method and apparatus.

### BACKGROUND

Today, the intelligent terminal, of which the representative is the intelligent machine, has entered the stage of universal popularity, and the functions of the intelligent terminal are more and more powerful, where, the wisdom voice service and its related functions are quite attractive. At present, the manufacturers usually take aim at developing "the most obedient" mobile phone, and develop a series of functions and applications, and make them become the biggest selling point. For example: a driver's assistant may, in the case that it is not convenient for a driver to carry out a manual operation, turn into executing the oral instructions issued by the driver, thereby freeing the driver's hands, so that the driver can concentrate on driving the vehicle. Therefore, the voice interaction has gradually become an important function of the flagship machine. However, there are some defects in the voice interactive function used in the related art: once a user has issued an oral instruction, then the intelligent terminal must completely implement the oral instruction, and is not able to be interrupted; if the user needs to suspend the implementation of the instruction and in turn to implement an oral instruction, then the intelligent terminal is not able make timely response to the next oral instruction. User experience will therefore be affected.

Thus it can be seen that, when it is switched among different voice control instructions in the related art, if it is required to interrupt or terminate implementing the current instruction and in turn to implement the next voice control instruction, then it must be completed by relying on an external interrupt triggered by a physical button or a virtual key on the intelligent terminal.

### SUMMARY

The present disclosure provides a voice interaction method and apparatus, to solve at least the problem that it can only depend on the external interrupt if it is required to switch among different voice control instructions during the voice interaction process in the related art.

According to one aspect of the present disclosure, a voice interaction method is provided.

The voice interaction method according to embodiments of the present disclosure comprises: acquiring a first voice control instruction, and executing a first operation corresponding to the first voice control instruction; gathering mixed audio data, comprising: audio data played when the first operation is executed and a second voice control instruction; filtering out the played audio data from the mixed audio data, and identifying the second voice control instruction; and switching from the first operation to a second operation corresponding to the second voice control instruction according to the second voice control instruction.

Preferably, the acquiring the first voice control instruction and executing the first operation comprises: receiving the first voice control instruction, and performing an analog-digital conversion process to the first voice control instruction; and identifying data subjected to the analog-digital conversion process, and executing the first operation according to an identification result.

Preferably, before filtering out the played audio data from the mixed audio data, the method further comprises: backing up the played audio data, where backup data are used for identifying the second voice control instruction from the mixed audio data. Preferably, the identifying the second voice control instruction from the mixed audio data, comprises: performing an analog-digital conversion process to the mixed audio data; comparing data subjected to the analog-digital conversion process with the backup data, and filtering out the backup data from the data subjected to the analog-digital conversion process; and identifying the second voice control instruction based on a remaining part of data after filtering out the backup data.

Preferably, after switching to the second operation according to the second voice control instruction, the method further comprises: monitoring an execution process of the second operation, to determine completion of the second operation; judging whether the second operation is to terminate execution of the first operation; and continuing to execute the first operation from a switching time corresponding to switching to the second operation if the second operation is not to terminate the execution of the first operation. According to another aspect of the present disclosure, a voice interactive apparatus is provided.

The voice interaction apparatus according to embodiments of the present disclosure comprises: a first execution module, configured to acquire a first voice control instruction, and execute a first operation corresponding to the first voice control instruction; a gathering module, configured to gather mixed audio data, comprising: audio data played when the first operation is executed and a second voice control instruction; an identification module, configured to filter out the played audio data from the mixed audio data, and identify the second voice control instruction; and a switching module, configured to switch from the first operation to a second operation corresponding to the second voice control instruction according to the second voice control instruction.

Preferably, the first execution module comprises: a first processing unit, configured to receive the first voice control instruction, and perform an analog-digital conversion process to the first voice control instruction; and an execution unit, configured to identify data subjected to the analog-digital conversion process, and execute the first operation according to an identification result.

Preferably, the above apparatus further comprises: a backup module, configured to back up the played audio data, where backup data are used for identifying the second voice control instruction from the mixed audio data.

Preferably, the identification module comprises: a second processing unit, configured to perform an analog-digital conversion process to the mixed audio data; a third processing unit, configured to compare data subjected to the analog-digital conversion process with the backup data, and filter out the backup data from the data subjected to the analog-digital conversion process; and an identification module, configured to identify the second voice control instruction based on a remaining part of data after filtering out the backup data.

Preferably, the above apparatus further comprises: a monitoring module, configured to monitor an execution process of the second operation, to determine completion of the second operation; a judgment module, configured to judge whether the second operation is to terminate execution of the first operation; and a second execution module, configured to continue to execute the first operation from a switching time corresponding to switching to the second operation when an output of the judgment module is that the second operation is not to terminate the execution of the first operation.

Through the embodiment of the present disclosure, by acquiring a first voice control instruction, and executing a first operation corresponding to the first voice control instruction; gathering mixed audio data, comprising: audio data played when the first operation is executed and a second voice control instruction; filtering out the played audio data from the mixed audio data, and identifying the second voice control instruction; and switching from the first operation to a second operation corresponding to the second voice control instruction according to the second voice control instruction, the problem that it can only depend on the external interrupt if it is required to switch among different voice control instructions during the voice interaction process in the related art is solved. Further, it is able to capture and judge instructions issued by a user in real time, and respond timely in the voice interaction process, which strengthens identification processing ability of the voice interaction and improves efficiency and user experience of the voice control interaction.

### BRIEF DESCRIPTION OF THE DRAWINGS

The accompanying drawings described here are used to provide further understanding for the present disclosure and constitute a part of the present application. The illustrated embodiments of the present disclosure and the description thereof are used to explain the present disclosure, rather than constituting an inappropriate limitation to the present disclosure. Where:
FIG. 1 is a flow chart illustrating a voice interaction method according to embodiments of the present disclosure;
FIG. 2 is a structure block diagram illustrating a voice interaction apparatus according to embodiments of the present disclosure;
FIG. 3 is a structure block diagram illustrating a voice interaction apparatus according to a preferable embodiment of the present disclosure;
FIG. 4 is a schematic structural diagram illustrating interior of an intelligent terminal performing voice control according to a preferable embodiment of the present disclosure.

### DETAILED DESCRIPTION

The present disclosure is described in detail with reference to the accompanying drawings and in combination with embodiments hereinafter. It should be illustrated that, in the case of not conflicting, embodiments in the present application and features in these embodiments can be combined with each other.

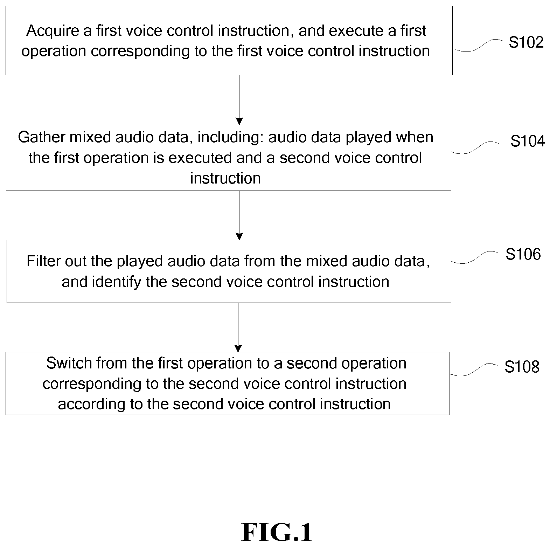

FIG. 1 is a flow chart illustrating a voice interaction method according to embodiments of the present disclosure. As shown in FIG. 1, the method can include following processing steps:
in step S102: a first voice control instruction is acquired, and a first operation corresponding to the first voice control instruction is executed;
in step S104: mixed audio data are gathered, where the mixed audio data includes: audio data played when the first operation is executed and a second voice control instruction;
in step S106: the played audio data are filtered out from the mixed audio data, and the second voice control instruction is identified; and
in step S108: it is switched from the first operation to a second operation corresponding to the second voice control instruction according to the second voice control instruction. It can only depend on the external interrupt if it is required to switch among different voice control instructions during the voice interaction process in the related art. By adopting the method as shown in FIG. 1, during the voice interaction process, if it is required to execute switching among different voice control instructions, then it is not required to complete by the external interrupt triggered by the physical button or the virtual key on the intelligent terminal any more, while it only requires gathering the played audio data due to execution of the first operation and the second voice control instruction at the mean time, and filtering out the played audio data to identify the second voice control instruction, so as to execute the second operation corresponding to the second voice control instruction, so that the problem that it can only depend on the external interrupt if it is required to switch among different voice control instructions during the voice interaction process in the related art is solved. Further, it is able to capture and judge instructions issued by a user in real time, and respond timely in the voice interaction process, which strengthens identification processing ability of the voice interaction and improves efficiency and user experience of the voice control interaction.

Preferably, in the step S102, the acquiring the first voice control instruction and executing the first operation can include following operations:
in step S1: the first voice control instruction is received, and an analog-digital conversion process is performed to the first voice control instruction;
in step S2: data subjected to the analog-digital conversion process are identified, and the first operation is executed according to an identification result.

In a preferable embodiment, a voice interaction application program is run and an initialization operation is executed. A voice control instruction is issued by the user, for example: play a movie. The intelligent terminal captures the "play a movie" instruction, and performs the analog-digital conversion process to the "play a movie" instruction. After performing the analog-digital conversion process to the "play a movie" instruction, the intelligent terminal identifies the instruction after the analog-digital conversion process, and responds to the instruction after the analog-digital conversion process, to consequently play the movie.

Preferably, in the step S106, before filtering out the played audio data from the mixed audio data, the method further includes following steps:
in step S3: the played audio data are backed up, where backup data are used for identifying the second voice control instruction from the mixed audio data.

In a preferable embodiment, the intelligent terminal can select audio data A corresponding to the above "play a movie" instruction from an audio source library, and performs a D/A conversion process to the audio data A. At the same time, an audio data A ' can further be copied from the above audio data A, and cached in processor of the intelligent terminal. The intelligent terminal will play analog data subjected to the analog-digital conversion process.

Preferably, in the step S106, the identifying the second voice control instruction from the mixed audio data includes following operations:
in step S4: an analog-digital conversion process is performed to the mixed audio data;
in step S5: the data subjected to the analog-digital conversion process are compared with the backup data, and the backup data are filtered out from the data subjected to the analog-digital conversion process;
in step S6: the second voice control instruction is identified based on a remaining part of data after filtering out the backup data.

In a preferable embodiment, the user further sends out a next voice control instruction during the process of playing the movie, for example: call XX. The intelligent terminal gathers the currently-played audio data A and the "call XX" instruction at the same time, and performs the A/D conversion process to audio data B composed by the audio data A and the "call XX" instruction together. The intelligent terminal identifies the "call XX" instruction through performing a subtraction operation to the audio data B and the audio data A' (i.e., filtering out the audio data A' from the audio data B), and then responds to the "call XX" instruction.

Preferably, in step S108, after switching to the second operation according to the second voice control instruction, the method further includes following steps:
in step S7: an execution process of the second operation is monitored, to determine completion of the second operation;
in step S8: it is judged whether the second operation is to terminate execution of the first operation;
in step S9: if the second operation is not to terminate the execution of the first operation, then it is continued to execute the first operation from a switching time corresponding to switching to the second operation.

In a preferable embodiment, the intelligent terminal executes an operation corresponding to the "call XX" instruction, pauses playing of the movie, and starts a dialing program to call XX. The intelligent terminal can judge whether the second operation (i.e., call XX) and the first operation (i.e., play the movie) are associated after monitoring that the call is over. Calling XX will not affect continuing to play the movie, therefore, playing the movie can be restarted from the switching time where playing of the movie is paused and the dialing program is started. However, if the voice control instruction issued by the user is not "call XX" but "stop playing the movie", then the latest voice control instruction issued by the user and the "play the movie" instruction issued before are closely associated, therefore, only the second operation will be executed to stop playing the move instead of replaying the movie.

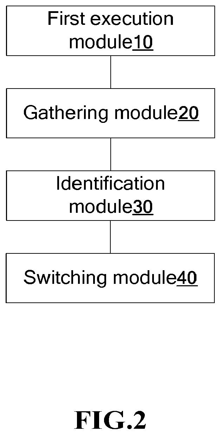

FIG. 2 is a structure block diagram illustrating a voice interaction apparatus according to embodiments of the present disclosure. As shown in FIG. 2, the voice interactive apparatus can include: a first execution module 10, configured to acquire a first voice control instruction, and execute a first operation corresponding to the first voice control instruction; a gathering module 20, configured to gather mixed audio data, including: audio data played when the first operation is executed and a second voice control instruction; an identification module 30, configured to filter out the played audio data from the mixed audio data, and identify the second voice control instruction; and a switching module 40 , configured to switch from the first operation to a second operation corresponding to the second voice control instruction according to the second voice control instruction.

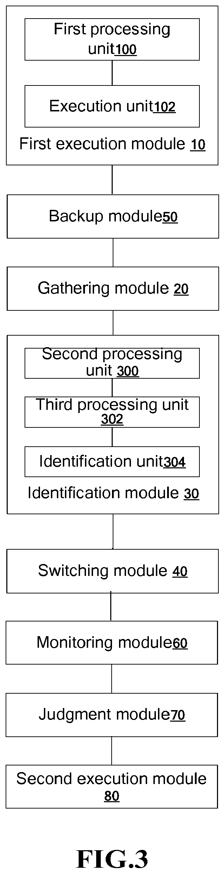

By adopting the apparatus as shown in FIG. 2, the problem that it can only depend on the external interrupt if it is required to switch among different voice control instructions during the voice interaction process in the related art is solved. Further, it is able to capture and judge instructions issued by the user in real time, and respond timely in the voice interaction process, which strengthens identification processing ability of the voice interaction and improves efficiency and user experience of the voice control interaction. Preferably, as shown in FIG. 3, the first execution module 10 can include: a first processing unit 100, configured to receive the first voice control instruction, and perform an analog-digital conversion process to the first voice control instruction; and an execution unit 102, configured to identify data subjected to the analog-digital conversion process, and execute the first operation according to an identification result.

Preferably, as shown in FIG. 3, the above apparatus further can include: a backup module 50, configured to back up the played audio data, where backup data are used for identifying the second voice control instruction from the mixed audio data.

Preferably, as shown in FIG. 3, the identification module 30 can include: a second processing unit 300, configured to perform an analog-digital conversion process to the mixed audio data; a third processing unit 302, configured to compare the data subjected to the analog-digital conversion process with the backup data, and filter out the backup data from the data subjected to the analog-digital conversion process; and an identification unit 304, configured to identify the second voice control instruction based on a remaining part of data after filtering out the backup data.

Preferably, as shown in FIG. 3, the above apparatus further can include: a monitoring module 60, configured to monitor an execution process of the second operation, to determine completion of the second operation; a judgment module 70, configured to judge whether the second operation is to terminate execution of the first operation; and a second execution module 80, configured to continue to execute the first operation from a switching time corresponding to switching to the second operation if the second operation is not to terminate the execution of the first operation.

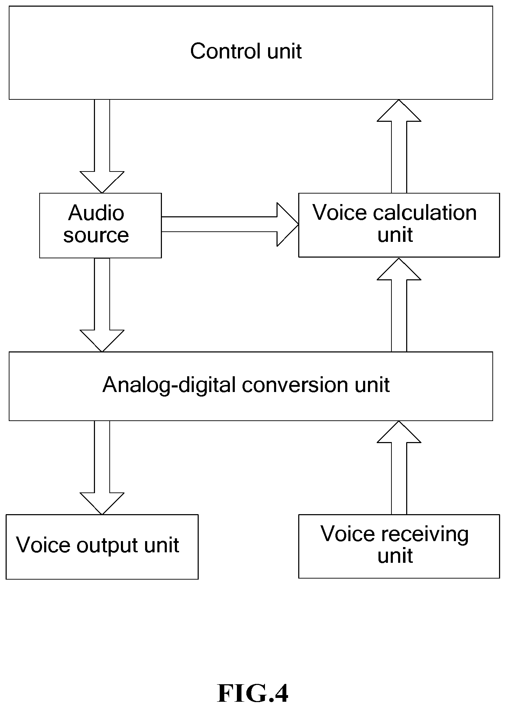

As a preferable embodiment of the present disclosure, FIG. 4 is a schematic structural diagram illustrating interior of an intelligent terminal performing voice control according to a preferable embodiment of the present disclosure. As shown in FIG. 4, the voice control apparatus within the intelligent terminal can include: a voice output unit, a voice receiving unit (equivalent to part function of the above first processing unit), an analog-digital conversion unit (equivalent to part function of the above first processing unit), a voice calculation unit (equivalent to the above third processing unit), an audio source and control unit (equivalent to the above execution unit, the identification unit, the monitoring module, the judgment module, and the second execution module). The audio downlink is to play a sound through the voice output unit, and the voice receiving unit gathers voice signals and sends the voice signals to the analog-digital conversion unit. The analog-digital conversion unit performs the analog-digital conversion process to the received audio signals and then sends the audio signals to the voice calculation unit. The voice calculation unit compares the data subjected to the conversion process with the audio source, to extract a meaningful voice instruction, makes timely response and executes a corresponding operation. Thus, the problem that the voice is unable to interact in time can be solved, and the voice interaction ability and the user experience can be improved.

A preferable working mode of combining each above mentioned unit together is as follows.

The voice interaction application program is run, to complete the initialization operation to the voice interaction application program.

The user sends the voice control instruction of "play a music".

The voice receiving unit (for example: a microphone (MIC)) gathers the "play the music" instruction and sends it to the analog-digital conversion unit (e.g.: an encoder (Codec) chip).

The Codec chip performs the A/D conversion process to the received "play the music" instruction, and then sends a converted instruction to the voice calculation unit (for example: a central processing unit (CPU)) for identification.

The CPU sends the instruction to a control unit CPU0 for responding after identifying the converted instruction.

The CPU0 selects music data A corresponding to the converted instruction from the audio source library and sends to the analog-digital conversion unit for the D/A conversion processing. At the same time, it is further required to copy audio data A' from the above music data A and sends to the voice calculation unit.

The analog-digital conversion unit sends the converted analog data to the voice output unit for playing.

The user further sends out a next voice control instruction during the process of playing the music, for example: "call XX".

The voice receiving unit gathers the currently-played music data A and the next voice control instruction at the same time, and sends to the analog-digital conversion unit.

The analog-digital conversion unit performs the A/D conversion process to the audio data B which is composed of the audio data A and the "call XX" instruction together, and then sends to the voice calculation unit for identification.

The voice calculation unit identifies the "call XX" instruction through performing a subtraction operation to the audio data B and the audio data A', and then sends the "call XX" instruction to the control unit CPU0 for responding.

The CPU0 acquires and executes an operation corresponding to the "call XX" instruction, pauses playing of the music, and starts a dialing program to call XX.

The control unit CPU0 restarts playing of the music after monitoring that the call is over. The user further sends out a voice control instruction "play the next music" during the process of playing the music.

The voice receiving unit gathers the currently-played music data A and the "play the next music" instruction at the same time, and sends to the analog-digital conversion unit.

The analog-digital conversion unit performs the A/D conversion process to audio data B' which is composed of the audio data A and the "play the next music" instruction together, and then sends to the voice calculation unit for identification.

The voice calculation unit identifies the "play the next music" instruction through performing a subtraction operation to the audio data B' and the audio data A', and then sends the "play the next music" instruction to the control unit CPU0 for responding.

The control unit CPU0 executes an operation of playing the next music according to the acquired "play the next music" instruction.

The user further sends an "exit music playing" instruction in the process of playing the next music.

The voice receiving unit gathers played audio data C (that is, music data of the currently-played next music) and the "exit music playing" instruction at the same time, and sends to the analog-digital conversion unit.

The analog-digital conversion unit performs the A/D conversion process to audio data B" which is composed of the audio data C and the "exit the music playing" instruction together, and then sends to the voice calculation unit for identification.

The voice calculation unit identifies the "exit the music playing" instruction through performing the subtraction operation to the audio data B" and the audio data C' (that is, when the above audio data C are sent to the analog-digital conversion unit, it is also required to copy the audio data C' from the above audio data C and sent the audio data C' to the voice calculation unit), and then sends the "exit the music playing" instruction to the control unit CPU0 for responding.

The control unit CPU0 acquires and executes an operation corresponding to the "exit the music playing" instruction, and immediately exits from the music playing.

From the above description, it can be seen that the above embodiments achieve following technical effects (it needs to be explained that these effects are effects that some of the preferable embodiments can achieve): by adopting the technical scheme provided by embodiments of the present disclosure, it is not required to complete by the external interrupt triggered by the physical button or the virtual key on the intelligent terminal any more, while it only requires gathering the played audio data due to execution of the first operation and the second voice control instruction at the mean time, and filtering out the played audio data to identify the second voice control instruction, so as to execute the second operation corresponding to the second voice control instruction, so that the problem that it can only depend on the external interrupt if it is required to switch among different voice control instructions during the voice interaction process in the related art is solved. Further, it is able to capture and judge instructions issued by a user in real time, and respond timely in the voice interaction process, which strengthens identification processing ability of the voice interaction and improves efficiency and user experience of the voice control interaction.

Obviously, it can be understood by those skilled in the art that each module or each step above-mentioned in the present disclosure can be implemented by the universal calculating apparatus, and they can be integrated in a single calculating apparatus, or distributed in the network made up by a plurality of calculating apparatus. Alternatively, they can be implemented by the executable program codes of the calculating apparatus. Accordingly, they can be stored in the storage apparatus and implemented by the calculating apparatus, and in some situation, the shown or described steps can be executed according to a sequence different from this place, or they are made to each integrated circuit module respectively, or a plurality of modules or steps there are made into the single integrated circuit module to be implemented. This way, the present disclosure is not limit to any specific form of the combination of the hardware and software.

The above description is only the preferred embodiments of the present disclosure and is not intended to limit the present disclosure. For those skilled in the art, the present disclosure can have various modifications and variations. All of modifications, equivalents and/or variations without departing from the spirit and essence of the present disclosure should be embodied in the scope of the appending claims of the present disclosure.

### INDUSTIAL PRACTICABILITY

As mentioned above, the voice interaction method and apparatus provided by the embodiment of the present disclosure have following beneficial effects: it is able to capture and judge instructions issued by the user in real time, and respond timely in the voice interaction process, which strengthens identification processing ability of the voice interaction and improves efficiency and user experience of the voice control interaction.

## Claims

1. A voice interaction method, comprising:
acquiring a first voice control instruction, and executing a first operation corresponding to the first voice control instruction;
gathering mixed audio data, comprising: audio data played when the first operation is executed and a second voice control instruction;
filtering out the played audio data from the mixed audio data, and identifying the second voice control instruction; and
switching from the first operation to a second operation corresponding to the second voice control instruction according to the second voice control instruction.

2. The method according to claim 1, wherein, the acquiring the first voice control instruction and executing the first operation comprises:
receiving the first voice control instruction, and performing an analog-digital conversion process to the first voice control instruction; and
identifying data subjected to the analog-digital conversion process, and executing the first operation according to an identification result.

3. The method according to claim 1, before filtering out the played audio data from the mixed audio data, further comprising:
backing up the played audio data, wherein backup data are used for identifying the second voice control instruction from the mixed audio data.

4. The method according to claim 3, wherein, the identifying the second voice control instruction from the mixed audio data, comprises:
performing an analog-digital conversion process to the mixed audio data;
comparing data subjected to the analog-digital conversion process with the backup data, and filtering out the backup data from the data subjected to the analog-digital conversion process; and
identifying the second voice control instruction based on a remaining part of data after filtering out the backup data.

5. The method according to claim 1, after switching to the second operation according to the second voice control instruction, further comprising:
monitoring an execution process of the second operation, to determine completion of the second operation;
judging whether the second operation is to terminate execution of the first operation; and
continuing to execute the first operation from a switching time corresponding to switching to the second operation if the second operation is not to terminate the execution of the first operation.

6. A voice interaction apparatus, comprising:
a first execution module, configured to acquire a first voice control instruction, and execute a first operation corresponding to the first voice control instruction;
a gathering module, configured to gather mixed audio data, comprising: audio data played when the first operation is executed and a second voice control instruction;
an identification module, configured to filter out the played audio data from the mixed audio data, and identify the second voice control instruction; and
a switching module, configured to switch from the first operation to a second operation corresponding to the second voice control instruction according to the second voice control instruction.

7. The apparatus according to claim 6, wherein, the first execution module comprises:
a first processing unit, configured to receive the first voice control instruction, and perform an analog-digital conversion process to the first voice control instruction; and
an execution unit, configured to identify data subjected to the analog-digital conversion process, and execute the first operation according to an identification result.

8. The apparatus according to claim 6, further comprising:
a backup module, configured to back up the played audio data, wherein backup data are used for identifying the second voice control instruction from the mixed audio data.

9. The apparatus according to claim 8, wherein, the identification module comprises:
a second processing unit, configured to perform an analog-digital conversion process to the mixed audio data;
a third processing unit, configured to compare data subjected to the analog-digital conversion process with the backup data, and filter out the backup data from the data subjected to the analog-digital conversion process; and
an identification unit, configured to identify the second voice control instruction based on a remaining part of data after filtering out the backup data.

10. The apparatus according to claim 6, further comprising:
a monitoring module, configured to monitor an execution process of the second operation, to determine completion of the second operation;
a judgment module, configured to judge whether the second operation is to terminate execution of the first operation; and
a second execution module, configured to continue to execute the first operation from a switching time corresponding to switching to the second operation when an output of the judgment module is that the second operation is not to terminate the execution of the first operation.
